# EUROPÄISCHE PATENTSCHRIFT

(11) **EP 1 894 655 B1**
(45) Veröffentlichungstag und Bekanntmachung des Hinweises auf die Patenterteilung: **21.03.2012**
(21) Anmeldenummer: 06119653.1
(22) Anmeldetag: 28.08.2006
(51) Int. Cl.: B23C 5/10

(54) **Fräswerkzeug zum spanenden Bearbeiten von Werkstücken**
Milling tool for chip removing machining of workpieces
Outil de fraisage destiné à l'usinage des pieces par enlèvement de matière

(43) Veröffentlichungstag der Anmeldung: 05.03.2008
(73) Patentinhaber: Fraisa Holding AG, 4512 Bellach (CH)
(72) Erfinder: Maushart, Josef, 4500, Solothurn (CH); Sichi, Tiziano, 4542, Luterbach (CH)
(74) Vertreter: BOVARD AG

(56) Entgegenhaltungen:
- EP-A1- 0 506 098
- DE-A1- 3 440 606
- DE-A1- 3 706 282
- DE-A1- 10 325 600
- DE-A1-102005 002 698
- JP-A- 2002 233 910

## Beschreibung

Die vorliegende Erfindung bezieht sich auf ein Fräswerkzeug zum spanenden Bearbeiten von Werkstücken, welches mit mehreren Schneidflanken und dazwischen angeordneten Spannuten versehen ist, welche Schneidflanken Schneidkanten aufweisen, entlang welcher Schneidkanten auf der Schneidseite Fasen angebracht sind, welche einen Keilwinkel aufweisen, der stumpfer ist als der Keilwinkel der Schneidkanten.

Derartige Fräswerkzeuge sind bekannt. Um eine Hochleistungsfähigkeit derartiger Werkzeuge erreichen zu können, sind diese z.B. aus Hartmetall, HSS oder Keramik gefertigt. Dieser Werkstoff weist eine relativ grosse Sprödigkeit auf. Beim Einsatz dieser Werkzeuge besteht somit ein erhöhtes Risiko, dass es insbesondere beim Bearbeiten von zähen Werkstoffen zu Ausbrüchen an den Schneidkanten kommen kann. Dadurch wird die Leistung der entsprechenden Werkzeuge stark beeinträchtigt.

Um einen derartigen Verschleiss der Werkzeuge stark herabsetzen zu können, sind an den Schneidkanten auf der Schneidseite Fasen angebracht, deren Keilwinkel stumpfer ist als der Keilwinkel der Schneidkante. Mit dieser angebrachten Fase wird erreicht, dass der Schneidkeil verstärkt wird, wodurch das Risiko von Ausbrüchen an den Schneidkanten massiv eingeschränkt wird. Dadurch werden die Standzeiten dieser Werkzeuge erhöht (siehe z.B. EP 0 506 098).

Derartige Werkzeuge können dazu neigen, während des Bearbeitungsvorgangs Schwingungen zu erzeugen, was sich im Extremfall als Pfeifton äussern kann. Schwingungen am Werkzeug bedeuten aber eine schlechtere Qualität der bearbeiteten Oberflächen, sie bedeuten aber auch, schlechte Standzeiten der Werkzeuge.

Die Aufgabe der Erfindung besteht nun darin, derartige Werkzeuge dahingehend zu verbessern, dass die Schwingungen möglichst unterbunden werden.

Erfindungsgemäss erfolgt die Lösung dieser Aufgabe dadurch, dass mindestens eine entlang einer Schneidkante verlaufende Fase einen Spanwinkel aufweist, der unterschiedlich ist zu den Spanwinkeln der entlang der weiteren Schneidkanten verlaufenden Fasen.

Durch diese einfache Massnahme wird am Werkzeug eine Asymmetrie der Schneidkanten erhalten, wodurch sich aufbauende Schwingungen unterdrückt werden können.

In vorteilhafter Weise weisen alle entlang einer Schneidkante verlaufenden Fasen einen unterschiedlichen Spanwinkel auf, wodurch die gewünschte Asymmetrie verstärkt wird.

In vorteilhafter Weise liegen die Spanwinkel der Fasen im Bereich von 0 bis -30°. In diesen Spanwinkelbereichen wird ein optimales Zeitspanvolumen bei gleichzeitiger hoher Standzeit des Werkzeugs erreicht.

Die Schneidflanken können glatte Schneidkanten aufweisen, die Schneidkanten können aber auch ein wellenförmiges Profil aufweisen, das sich über die Breite der Schneidflanken erstreckt, je nachdem, für welchen Einsatz das Werkzeug vorgesehen ist.

In vorteilhafter Weise erstreckt sich die jeweilige Fase mindestens über einen Teilbereich der Höhe der Wellenberge des wellenförmigen Profils, wodurch eine optimale Verstärkung der Wellenberge erreicht wird.

Eine weitere vorteilhafte Ausgestaltung der Erfindung besteht darin, dass die Schneidkanten der Schneidflanken unterschiedliche Drallwinkel aufweisen. Dadurch wird der asymmetrische Aspekt verstärkt, was das Werkzeug weniger empfindlich gegenüber Schwingungsanregungen macht.

Die Schneidkanten der Schneidflanken können auch mit in die Spannuten hineinragenden Wölbungen versehen sein, so dass der jeweils entlang einer Schneidkante verlaufende Drallwinkel unterschiedliche Grössen aufweist. Dies verhindert ein Anhaften der Späne und wirkt spänebrechend. Die Standzeiten der Werkzeuge werden dadurch verbessert.

In vorteilhafter Weise weist die Oberfläche der Fase eine geringere Rauheit auf, als die Oberfläche der Spannuten. Dadurch wird erreicht, dass die abgearbeiteten Späne optimal weggeleitet werden.

Ausführungsformen der Erfindung werden nachfolgend anhand der beiliegenden Zeichnung beispielhaft näher erläutert.

Es zeigt:
Fig. 1 eine Ansicht auf ein erfindungsgemässes Fräswerkzeug mit profilierten Schneidflanken;
Fig. 2a eine räumliche Darstellung dieses erfindungsgemässen Fräswerkzeugs;
Fig. 2b eine vergrösserte Darstellung des in Fig. 2a eingekreisten Bereichs des erfindungsgemässen Fräswerkzeugs;
Fig. 2c eine vergrösserte Darstellung des in Fig. 2a eingekreisten Bereichs eines anders ausgestalteten erfindungsgemässen Fräswerkzeugs;
Fig. 3 eine Teilansicht des Schnitts entlang der Linie III-III gemäss dem in Fig. 1 dargestellten erfindungsgemässen Fräswerkzeug;
Fig. 4a eine Ansicht auf ein erfindungsgemässes Fräswerkzeug mit glatten Schneidkanten;
Fig. 4b eine Teilansicht des Schnitts entlang Linie IV-IV gemäss dem in Fig. 4a dargestellten erfindungsgemässen Fräswerkzeug;
Fig. 5 die Ansicht einer in eine Ebene abgewickelten Schneidkante, welche entlang dieser Schneidkante verlaufende Drallwinkel unterschiedlicher Grössen aufweist; und
Fig. 6 in einer Ebene abgebildete Schneidkanten eines Fräswerkzeugs mit unterschiedlichen Drallwinkeln.

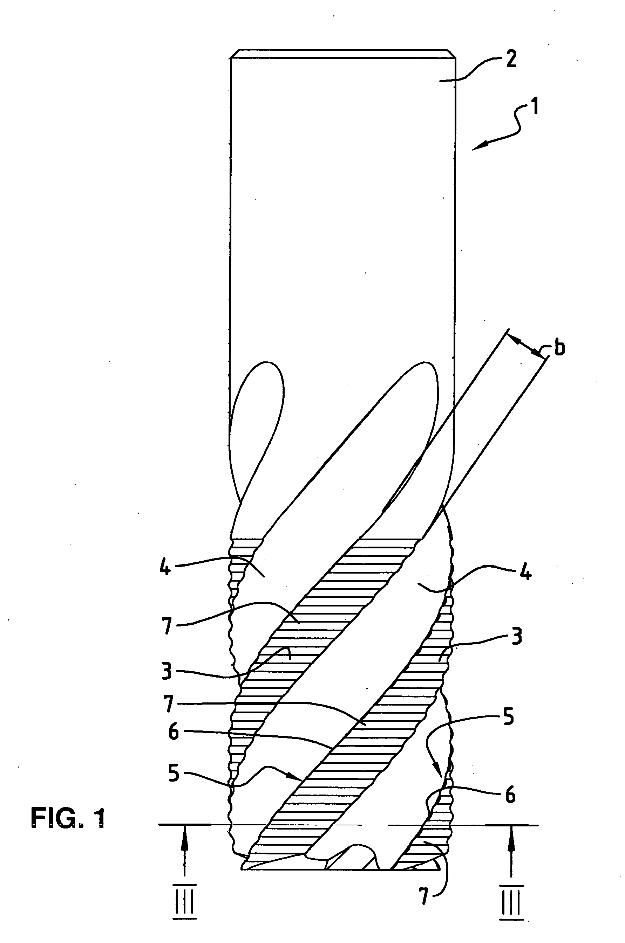

Fig. 1 zeigt eine erste Ausführungsform eines Fräswerkzeuges 1, welches zum Schruppen von Werkstücken geeignet ist. Dieses Fräswerkzeug 1 weist einen zylindrischen Schaft 2 auf, in dessen unteren Bereich Spannuten 4 angeordnet sind. Zwischen den Spannuten 4 befinden sich die Schneidflanken 3. Die Spannuten 4 und demzufolge die Schneidflanken 3 sind in bekannter Weise spiralförmig angeordnet, weisen somit einen so genannten Drallwinkel auf. Die Schneidflanken 3 sind auf der Schneidseite 5 mit Schneidkanten 6 versehen, die mit einem vorgegebenen Spanwinkel ausgestattet sind. Die Schneidkanten 6 sind jeweils mit einem wellenlinienförmigen Profil 7 versehen, welches sich über die ganze Breite b der Schneidflanken 3 erstreckt. Derartige wellenlinienförmige Profile sind beispielsweise unter der Bezeichnung "NRF", "NRC", "MR", "WRC" oder "NF" bekannt.

Dieses Fräswerkzeug 1 lässt sich in bekannter Weise mit dem zylinderförmigen Schaft 2 in eine entsprechende Werkzeugmaschine einspannen, wonach das Werkstück in einem Fräsvorgang bearbeitet werden kann.

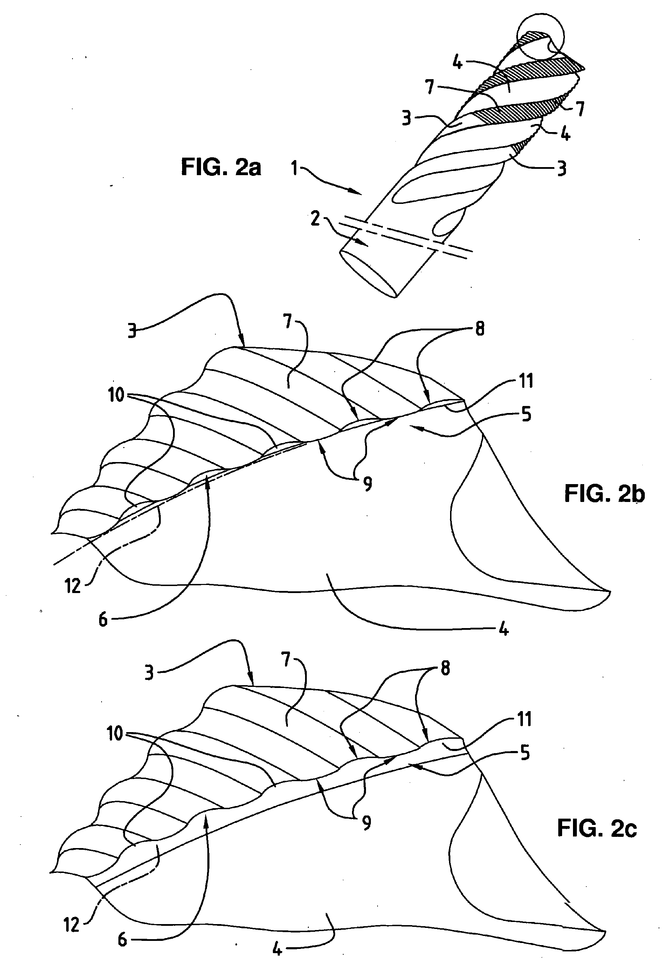

Fig. 2a zeigt in räumlicher Darstellung das erfindungsgemässe Fräswerkzeug gemäss Fig. 1 mit dem zylindrischen Schaft, den Schneidflanken 3, den Spannuten 4 und dem wellenlinienförmigen Profil 7. Ein Bereich der Stirnzone dieses Werkzeugs 1, der in Fig. 2a eingekreist ist, ist in Fig. 2b vergrössert dargestellt.

Fig. 2b zeigt einen Teil einer Schneidflanke 3, über welche sich das wellenlinienförmige Profil 7 erstreckt. Diese Schneidflanke 3 grenzt an eine Spannut 4 an, aus welcher in dieser Fig. 2b lediglich ein Teil ersichtlich ist. Auf der hier dargestellten Schneidseite 5 der Schneidflanke 3 ist die Schneidkante 6 ersichtlich. Diese weist wegen des wellenlinienförmigen Profils 7 auf der Schneidflanke 3 eine Wellenlinienform auf mit Wellenbergen 8 und Wellentälern 9. Im oberen Bereich der Wellenberge 8 ist die Fase 10 angeschliffen. Mit ausgezogener Linie 11 ist das Ausführungsbeispiel dargestellt, bei welchem sich die Fase 10 nur über einen oberen Bereich der Wellenberge 8 erstreckt. Auf der linken Seite in Fig. 2b ist mit strichpunktierter Linie 12 ein Ausführungsbeispiel dargestellt, bei welchem sich die Fase 10 über die gesamte Höhe der Wellenberge 8 erstreckt.

In Fig. 2c ist eine Ausführungsform des Werkzeugs gemäss Fig. 1 und Fig. 2a ersichtlich, bei welcher die Fasenbreite grösser ist, als die Höhe der Wellenberge. Somit befindet sich die Grundlinie der Fase 10 unterhalb der Wellentäler 9 in der Spannut 4.

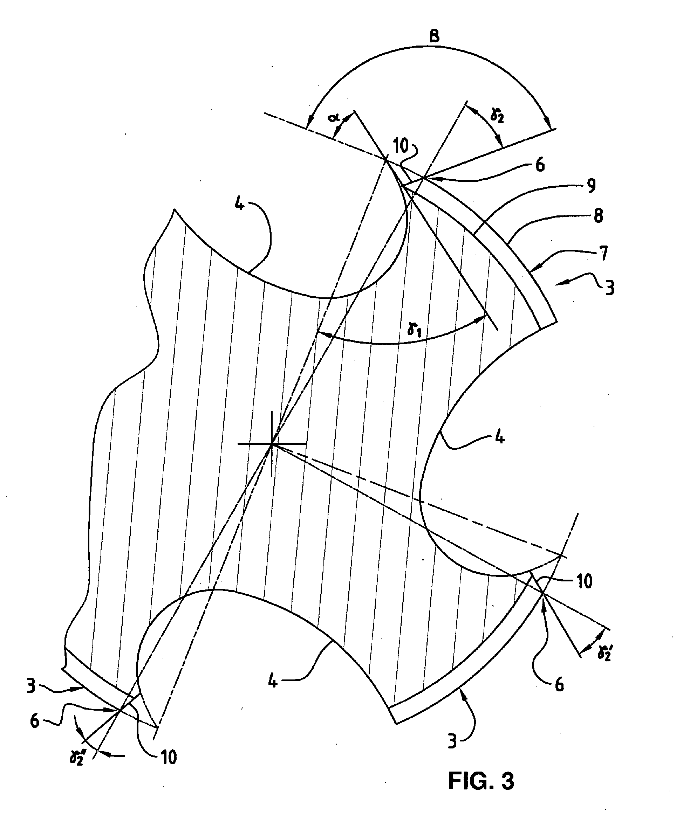

Aus der Schnittdarstellung gemäss Fig. 3 sind drei Schneidflanken 3 der insgesamt vier Schneidflanken, die dieses hier dargestellte Ausführungsbeispiel zeigt, ersichtlich. Zwischen den Schneidflanken 3 ist jeweils die Spannut 4 angeordnet. Ebenfalls ersichtlich sind die Wellenberge 8 und die Wellentäler 9 des wellenlinienförmigen Profils 7, welches sich über die gesamte Schneidflanke 3 erstreckt. In Fig. 3 ist auch die jeweilige Fase 10 ersichtlich, welche im Bereich der Schneidkante 6 jeweils angebracht ist.

In Fig. 3 sind zu der Schneidkante 6, die in dieser Figur oben dargestellt ist, die jeweiligen Winkel angegeben. Der Winkel Y₁ zeigt den Spanwinkel der Schneidflanke des Fräswerkzeugs, wenn keine Fase 10 angebracht wäre. Der Winkel α zeigt den Keilwinkel, den das Fräswerkzeug aufweist ohne die angebrachte Fase. Der Winkel β zeigt den Keilwinkel, den das Werkzeug mit der angeschliffenen Fase 10 bildet. Der Winkel Y2 zeigt den Spanwinkel der Fase 10.

Der Spanwinkel Y2 der ersten Schneidkante 6 dieses Werkzeugs, der Spanwinkel Y2' der zweiten Schneidkante 6 dieses Werkzeugs und der Spanwinkel Y2" der dritten Schneidkante 6 dieses Werkzeugs weisen jeweils eine unterschiedliche Grösse auf. In vorteilhafter Weise haben diese Spanwinkel eine Grösse, die zwischen -20° und -30° liegt. Sie können beispielsweise beim hier dargestellten vierschneidigen Werkzeug so angeordnet sein, dass die erste Schneidkante einen Spanwinkel von -20° aufweist, der Spanwinkel der zweiten Schneidkante beträgt beispielsweise -25°, der Spanwinkel der dritten Schneidkante beispielsweise -20° und der Spanwinkel der vierten Schneidkante beispielsweise -28°. Selbstverständlich können auch andere Abstufungen verwendet werden.

In vorteilhafter Weise sind die Fasen 10 derart angebracht, dass die Schneidkante 6 bezüglich der Schneidflanke 3 immer die gleiche Position hat. Dies bedeutet, dass über den Umfang des Werkzeugs gesehen die Schneidkanten 6 einen identischen Abstand voneinander haben. Damit wird erreicht, dass der Radius der Schneidkanten immer absolut identisch ist, unabhängig davon, welchen Freiwinkel die Schneidflanken aufweisen. Durch die unterschiedlichen Spanwinkel Y₂, Y₂', Y₂", ... ergibt sich somit eine unterschiedliche Breite der Fasen 10.

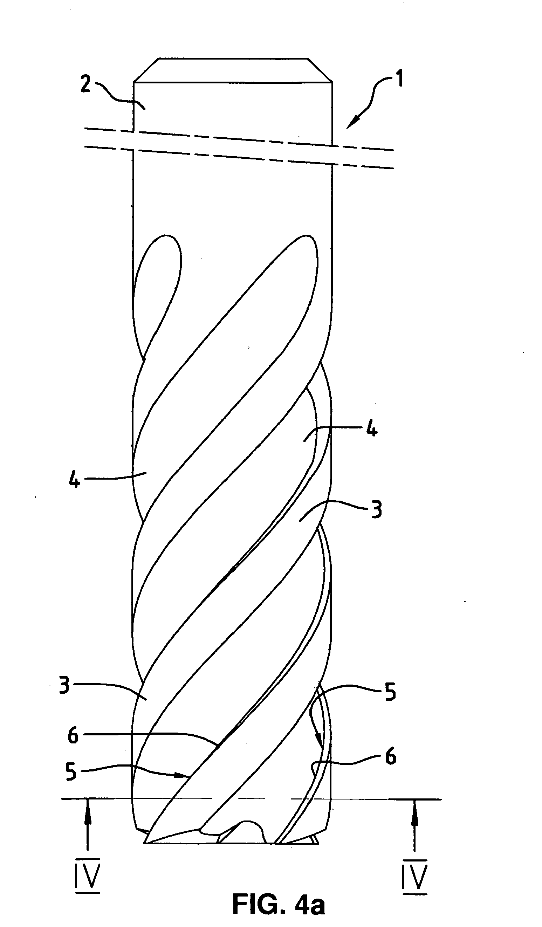

Fig. 4a zeigt eine Ansicht auf eine andere Ausführungsform eines erfindungsgemässen Fräswerkzeugs 1, wobei für gleiche Teile die gleichen Bezeichnungen verwendet werden wie in den vorhergehenden Figuren. Dieses Fräswerkzeug 1 weist ebenfalls einen zylindrischen Schaft 2 auf, der im unteren Bereich ebenfalls mit Spannuten 4 ausgestattet ist, zwischen welchen sich die Schneidflanken 3 befinden. Auch hier sind die Spannuten 4 und demzufolge die Schneidflanken 3 spiralförmig angeordnet und bilden jeweils einen Drallwinkel. Die Schneidflanken 3 sind auf der Schneidseite 5 mit Schneidkanten 6 versehen, die mit einem vorgegebenen Spanwinkel ausgestattet sind. Im Gegensatz zum vorhergehenden Ausführungsbeispiel weisen die Schneidflanken eine glatte Oberfläche auf, das heisst, dass auch die Schneidkanten 6 glatt ausgebildet sind. Auch dieses Fräswerkzeug lässt sich in bekannter Weise mit dem zylinderförmigen Schaft 2 in eine Werkzeugmaschine einspannen, um das Werkzeug zu bearbeiten.

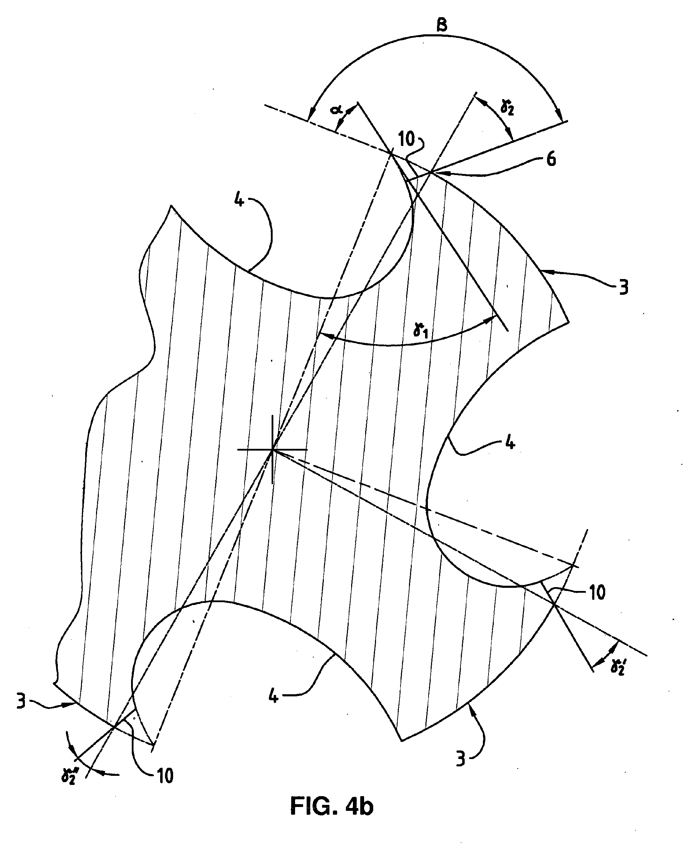

Fig. 4b zeigt eine Schnittdarstellung durch das Werkzeug gemäss Fig. 4a, wobei diese Fig. 4b entsprechend der Fig. 3 ausgebildet ist. Auch hier sind drei Schneidflanken 3 der insgesamt vier Schneidflanken, die dieses Werkzeug aufweist, ersichtlich. Auch hier sind zwischen den Schneidflanken 3 jeweils die Spannuten 4 angeordnet. Ebenfalls im Bereich der Schneidkanten 6 ist jeweils die Fase 10 angebracht. Die hier eingetragenen Winkel entsprechen den Winkeln, wie sie in Fig. 3 angegeben sind: der Winkel Y₁ zeigt den Spanwinkel der Schneidflanke des Fräswerkzeugs, wenn keine Fase 10 angebracht wäre, der Winkel α zeigt den Keilwinkel, den das Fräswerkzeug aufweisen würde ohne die angebrachte Fase 10, der Winkel β zeigt den Keilwinkel, den das Fräswerkzeug mit der angeschliffenen Fase 10 bildet und der Winkel Y₂ zeigt den Spanwinkel der Fase 10.

Wie bei der Ausführungsform gemäss Fig. 3 sind die Spanwinkel Y₂, Y₂', Y₂" in der Grösse unterschiedlich voneinander und können in identischer Weise ausgebildet sein, wie dies zu Fig. 3 beschrieben worden ist. Die Fasen 10 erhalten eine Breite, die kleiner ist als 5 % des Durchmessers des Fräswerkzeuges.

Die Fase 10 lässt sich bei diesen vorgängig dargestellten Fräswerkzeugen mit einem einzigen Flachschleifvorgang entlang der Schneidkante 6 herstellen. In vorteilhafter Weise wird die Oberfläche der Fase sehr fein geschliffen, beispielsweise mit einer Rauheit, die besser als 0,05 µm ist, so dass sie eine geringere Rauhtiefe aufweist, als die Oberfläche der Spannuten, dadurch wird ein optimales Abgleiten der am Werkstück abgearbeiteten Späne erreicht. Denkbar ist auch, dass die Rauhtiefe der geschliffenen Fasenoberfläche und der geschliffenen Oberfläche der Spannuten praktisch gleich und sehr gering sind. Hierbei erhält man aber den Nachteil, dass das Herstellen der Spannuten, je feiner deren Oberfläche ist, teurer wird. Andererseits ist die Herstellung dieser Fase 10 sehr einfach und somit kostengünstig.

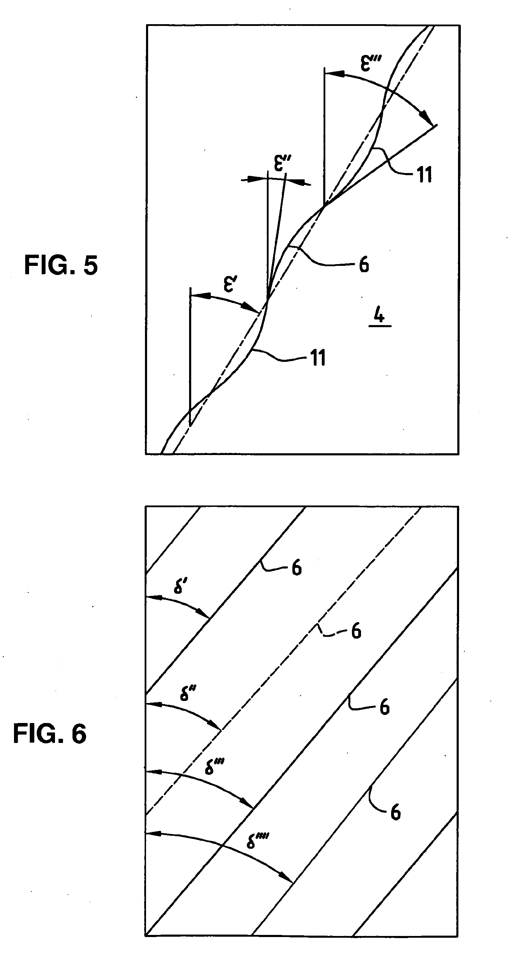

In Fig. 6 sind die Schneidkanten 6 eines erfindungsgemässen Fräswerkzeugs in einer in eine Ebene abgewickelten Position dargestellt. Diese Schneidkanten weisen einen so genannten Drallwinkel δ auf. Dieser Drallwinkel δ kann für alle Schneidkanten 6 eines Fräswerkzeuges gleich sein. Der Drallwinkel δ der einzelnen Schneidkanten 6 eines Fräswerkzeuges kann aber auch pro Schneidflanke unterschiedliche Grössen aufweisen, wie dies in Fig. 6 dargestellt ist. Der Drallwinkel δ', δ", δ"' und δ"" können unterschiedliche Grössen aufweisen: δ' und δ"' können beispielsweise 39,5° betragen, δ" 41° und δ"" 38°. Selbstverständlich wären auch andere geeignete Grössen denkbar. Mit dieser Anordnung wird die gewünschte Asymmetrie des Werkzeuges verstärkt, was die vorgängig beschriebenen und zu erreichenden Eigenschaften noch verbessert.

Fig. 5 zeigt ebenfalls eine in eine Ebene abgewickelte Schneidkante 6 eines Fräswerkzeugs. Diese Schneidkante 6 ist wellenförmig ausgebildet, wodurch in die Spannuten hineinragende Wölbungen 11 entstehen. Dadurch werden, wie aus Fig. 5 ersichtlich ist, entlang einer Schneidkante 6 verlaufende Drallwinkel ε', ε" und ε"' unterschiedlicher Grössen erhalten. Dies verhindert ein Anhaften der Späne und wirkt spänebrechend. Es ist klar, dass bei dieser Ausführungsform das Anbringen der Fasen 10 mit Mehraufwand verbunden ist.

Mit diesen Ausgestaltungen der Schneidkanten an Fräswerkzeugen zur Bearbeitung von Werkstücken erreicht man neben einer Verstärkung der Schneidkanten, was in vorteilhafter Weise zur Folge hat, dass die sonst bekannten Ausbrüche der Schneidkanten wesentlich unterbunden werden können, auch einen ruhigeren Lauf der Werkzeuge. Das Auftreten von Schwingungen kann massiv gedämpft werden, was zu besseren Oberflächengüten der bearbeiteten Flächen und besseren Standzeiten der Werkzeuge führt.

## Patentansprüche

1. Fräswerkzeug zum spanenden Bearbeiten von Werkstücken, welches mit mehreren Schneidflanken (3) und dazwischen angeordneten Spannuten (4) versehen ist, welche Schneidflanken (3) Schneidkanten (6) aufweisen, entlang welcher Schneidkanten (6) auf der Schneidseite (5) Fasen (10) angebracht sind, welche einen Keilwinkel (β) aufweisen, der stumpfer ist als der Keilwinkel (α) der Schneidkanten (6), **dadurch gekennzeichnet, dass** mindestens eine entlang einer Schneidkante (6) verlaufende Fase (10) einen Spanwinkel (γ₂) aufweist, der unterschiedlich ist zu den Spanwinkeln (γ₂', γ₂",...) der entlang der weiteren Schneidkanten (6) verlaufenden Fasen (10).

2. Fräswerkzeug nach Anspruch 1, **dadurch gekennzeichnet, dass** alle entlang einer Schneidkante (6) verlaufenden Fasen (10) einen unterschiedlichen Spanwinkel (γ₂, γ₂', γ₂", ...) aufweisen.

3. Fräswerkzeug nach Anspruch 1 oder 2, **dadurch gekennzeichnet, dass** der Spanwinkel (γ₂, γ₂', γ₂", ...) der Fasen (10) im Bereich von 0° bis -30° liegt.

4. Fräswerkzeug nach einem der Ansprüche 1 bis 3, **dadurch gekennzeichnet, dass** die Schneidflanken (3) glatte Schneidkanten (6) aufweisen.

5. Fräswerkzeug nach einem der Ansprüche 1 bis 3, **dadurch gekennzeichnet, dass** die Schneidkanten (6) ein wellenförmiges Profil (7) aufweisen, das sich über die Breite der Schneidflanken (3) erstreckt.

6. Fräswerkzeug nach Anspruch 5, **dadurch gekennzeichnet, dass** sich die jeweilige Fase (10) mindestens über einen Teilbereich der Höhe der Wellenberge (8) des wellenförmigen Profils (7) erstreckt.

7. Fräswerkzeug nach einem der Ansprüche 1 bis 6, **dadurch gekennzeichnet, dass** die Schneidkanten (6) der Schneidflanken (3) unterschiedliche Drallwinkel (δ) aufweisen.

8. Fräswerkzeug nach einem der Ansprüche 1 bis 7, **dadurch gekennzeichnet, dass** die Schneidkanten (6) der Schneidflanken (3) mit in die Spannuten (4) hineinragenden Wölbungen (11) versehen sind, so dass der jeweils entlang einer Schneidkante (6) verlaufende Drallwinkel (ε) unterschiedliche Grössen aufweist.

9. Fräswerkzeug nach einem der Ansprüche 1 bis 8, **dadurch gekennzeichnet, dass** die Oberfläche der Fase (10) eine geringere Rauheit aufweist, als die Oberfläche der Spannuten (4).

## Claims

1. Milling tool for the processing of workpieces by cutting that is provided with multiple cutting flanks (3) and flutes (4) arranged in between these, whereby said cutting flanks (3) have cutting edges (6) along the cutting side (5) of which bezels (10) are provided that have a wedge angle (ß) that is more obtuse than the wedge angle (α) of the cutting edges (6), **characterized in that** at least one bezel (10) running along a cutting edge (6) has an effective cutting angle (γ₂) that differs from the effective cutting angles (γ₂', γ₂", ...) of the bezels (10) running along the further cutting edges (6).

2. Milling tool according to claim 1, **characterized in that** all bezels (10) running along a cutting edge (6) have a different effective cutting angle (γ₂, _{γ2}', γ₂"_{,} ...).

3. Milling tool according to claim 1 or 2, **characterized in that** the effective cutting angle (γ₂, γ₂', γ₂", ...) of the bezels (10) is in the range from 0° to -30°.

4. Milling tool according to one of the claims 1 to 3, **characterized in that** the cutting flanks (3) have smooth cutting edges (6).

5. Milling tool according to one of the claims 1 to 3, **characterized in that** the cutting edges (6) have a wave-shaped profile (7) that extends over the width of the cutting flanks (3).

6. Milling tool according to claim 5, **characterized in that** the respective bezel (10) extends over at least a portion of the height of the wave crests (8) of the wave-shaped profile (7).

7. Milling tool according to one of the claims 1 to 6, **characterized in that** the cutting edges (6) of the cutting flanks (3) have different angles of twist (δ).

8. Milling tool according to one of the claims 1 to 7, **characterized in that** the cutting edges (6) of the cutting flanks (3) are provided with bulges (11) that protrude into the flutes (4) such that the angle of twist (ε) that each extends along a cutting edge (6) has different magnitudes.

9. Milling tool according to one of the claims 1 to 8, **characterized in that** the surface of the bezel (10) has lower roughness than the surface of the flutes (4).

## Revendications

1. Outil de fraisage pour l'usinage de pièces à travailler par formation de copeaux, muni de multiples flancs de coupe (3) et de cannelures (4) disposées entre ces derniers, lesdits flancs de coupe (3) comportant des arêtes de coupe (6) le long desquelles sont prévus, du côté de coupe (5), des chanfreins (10) ayant un angle de taillant (ß) qui est plus obtus que l'angle de taillant (α) desdites arêtes de coupe (6), **caractérisé en ce qu'**au moins un chanfrein (10) s'étendant le long d'une arête de coupe (6) possède un angle de coupe (γ₂) qui est différent des angles de coupe (γ₂', γ₂", ...) desdits chanfreins (10) s'étendant le long desdites autres arêtes de coupe (6).

2. Outil de fraisage selon la revendication 1, **caractérisé en ce que** tous les chanfreins (10) s'étendant le long d'une arête de coupe (6) possèdent un angle de coupe différent (γ₂, γ₂', γ₂", ...).

3. Outil de fraisage selon la revendication 1 ou 2, **caractérisé en ce que** ledit angle de coupe (γ₂, γ₂', γ₂", ...) desdits chanfreins (10) est compris entre 0° et -30°.

4. Outil de fraisage selon l'une des revendications 1 à 3, **caractérisé en ce que** lesdits flancs de coupe (3) possèdent des arêtes de coupe lisses (6).

5. Outil de fraisage selon l'une des revendications 1 à 3, **caractérisé en ce que** lesdites arêtes de coupe (6) possèdent un profil ondulé (7) s'étendant selon la largeur desdits flancs de coupe (3).

6. Outil de fraisage selon la revendication 5, **caractérisé en ce que** le chanfrein respectif (10) s'étend selon au moins une partie de la hauteur des crêtes d'onde (8) dudit profil ondulé (7).

7. Outil de fraisage selon l'une des revendications 1 à 6, **caractérisé en ce que** les arêtes de coupe (6) desdits flancs de coupe (3) possèdent des angles de torsade (δ) différents.

8. Outil de fraisage selon l'une des revendications 1 à 7, **caractérisé en ce que** les arêtes de coupe (6) desdits flancs de coupe (3) sont munies de voussures (11 ) qui font saillie dans lesdites cannelures (4) de telle manière que ledit angle de torsade (ε) s'étendant le long d'une arête de coupe (6) possède des valeurs différentes.

9. Outil de fraisage selon l'une des revendications 1 à 8, **caractérisé en ce que** la surface dudit chanfrein (10) possède une rugosité moindre que la surface desdites cannelures (4).
